# EUROPEAN PATENT SPECIFICATION

(11) **EP 1 366 800 B1**
(45) Date of publication and mention of the grant of the patent: **28.12.2005**
(21) Application number: 03010171.1
(22) Date of filing: 06.05.2003
(51) Int. Cl.: B01D 53/84

(54) **Apparatus for biofiltering exhausted air from waste water processing systems, and waste material storing, pre-processing and processing systems**
Vorrichtung zur Biofilterung von Abluft der Abwasserreinigung und Abfallaufbewahrung, -vorbehandlung und Behandlungssysteme
Dispositif de biofiltrage d'air d'échappement du traitement d'eaux résiduaires et systemes de stockage, prétraitement et traitement de déchets

(30) Priority: 30.05.2002 IT MI20021173
(43) Date of publication of application: 03.12.2003
(73) Proprietor: Ionics Italba S.P.A., 20139 Milano (IT)
(72) Inventor: Greghi, Renzo, 20146 Milano (IT); Ferri, Giancarlo, 20090 San Felice, Segrate (MI) (IT)
(74) Representative: Cicogna, Franco

(56) References cited:
- EP-A- 0 397 645
- DE-A- 3 727 269
- FR-A- 2 390 198
- FR-A- 2 591 122
- US-A- 4 786 297

## Description

### BACKGROUND OF THE INVENTION

The present invention relates to an apparatus for biofiltering exhausted air from waste water processing systems, and waste material storing, pre-processing and processing systems.

As is known, biofiltering is an air cleaning method, exploiting biochemical processes for removing polluting substances carried by exhausted air coming from waste water processing systems, and waste material storing, pre-processing and processing systems.

The biofiltering can be generally applied to industrial systems, in which are performed processes generating objectionable odors.

The removal of the polluting substances is based on a transfer of said polluting substances from a gaseous phase to a solid carrier, thereon adhere microorganisms susceptible to degrade the objectionable or polluting substances, to essentially provide CO₂ and H₂0.

The conventionally used filtering material comprise tree bark, peat, compost, lignocellulose residues, and biologically active materials.

The above mentioned removal methods provide to use air distributing systems which do not allow the mechanical means for servicing the filtering means to directly access the biofilter.

Thus, the maintenance and down-times for the system are inevitably very long.

Another problem is that it is necessary to use a lot of labour for servicing and replacing the filter, with a consequent great increase of the operating and processing cost.

### SUMMARY OF THE INVENTION

Accordingly, the aim of the present invention is to overcome the above mentioned drawbacks, by providing an apparatus for biofiltering exhausted air from waste water processing systems and waste material storing, pre-processing and processing systems, allowing to directly operate on the bottom of the filtering apparatus, by mechanical means of any desired size, without damaging the air distributing or delivering system.

Within the scope of the above mentioned aim, a main object of the present invention is to provide such an apparatus allowing to easily and quickly servicing the biofilter, without the need of stopping the operation of the system.

Another object of the present invention is to provide such an apparatus allowing the above mentioned systems to be easily serviced by using conventional servicing and maintenance means, thereby reducing the servicing time to a period of an order of few hours.

Yet another object of the present invention is to provide such an apparatus, which, owing to its specifically designed construction, is very reliable and safe in operation and which, moreover, is very competitive from a mere economic standpoint.

According to one aspect of the present invention, the above mentioned aim and objects, as well as yet other objects, which will become more apparent hereinafter, are achieved by an apparatus for biofiltering exhausted air from waste water processing systems, waste material storing, pre-processing and processing systems, characterized in that said apparatus comprises a concrete basin for holding filtering material therein, said basin having long sides and short sides, said basin being delimited, through the long sides thereof, by toewalls and, through at least a short side thereof, by at least a removable bench, said basin having a basin bottom on which is provided at least a first plurality of draining channel in which are engaged exhausted air distributing pipes, said pipes being connected to at least an exhausted air inlet manifold, said driving channel extending in the feeding direction of filtering material servicing and replacing means.

### BRIEF DESCRIPTION OF THE DRAWINGS

Further characteristics and advantages of the present invention will become more apparent hereinafter from the following detailed disclosure of a preferred, though not exclusive, embodiment of an apparatus for filtering exhausted air from waste water processing systems, waste material storing, pre-processing and processing systems, which has been illustrated, by way of an indicative, but not limitative, example, in the figures of the accompanying drawings, where:

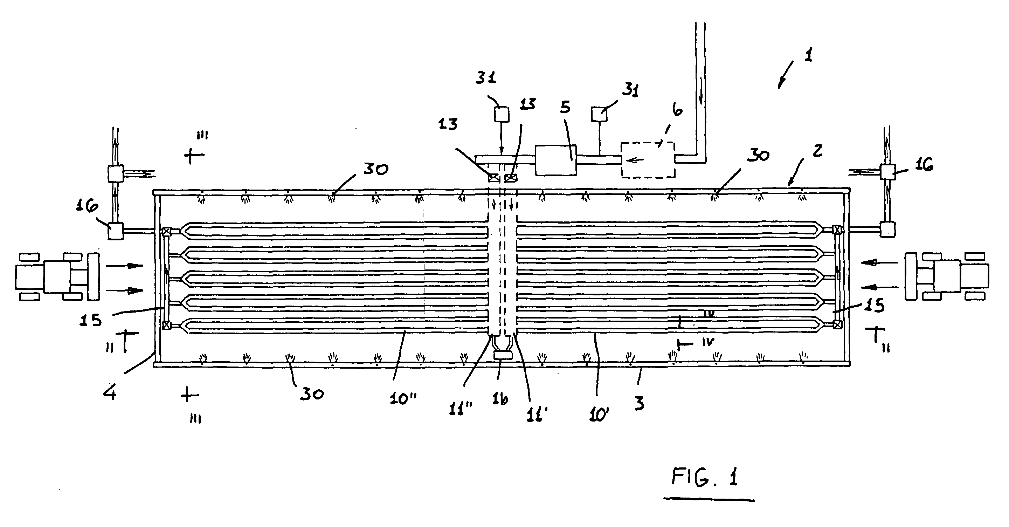

Figure 1 is a schematic top plan view illustrating the apparatus according to the invention;

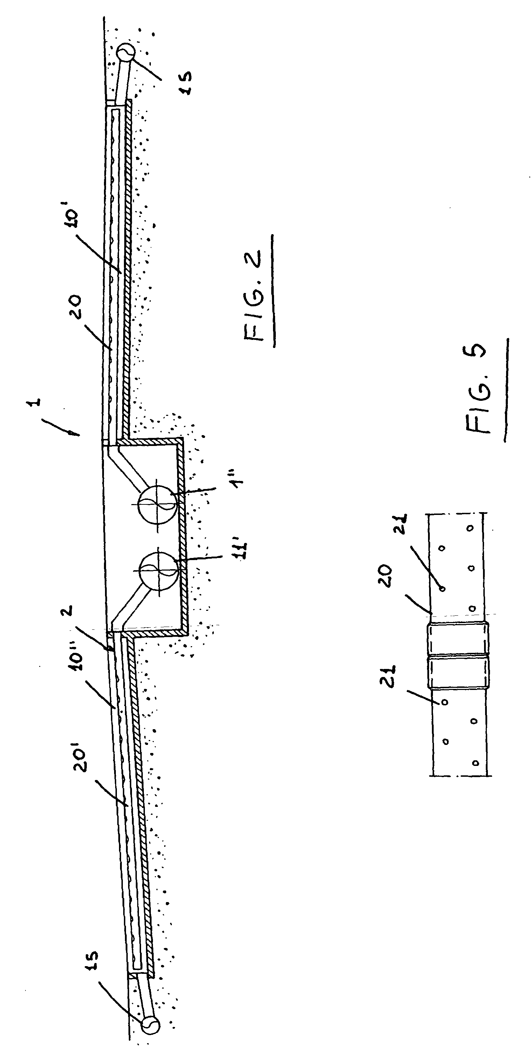

Figure 2 is a cross-sectional view of the apparatus substantially taken along the line II-II of figure 1;

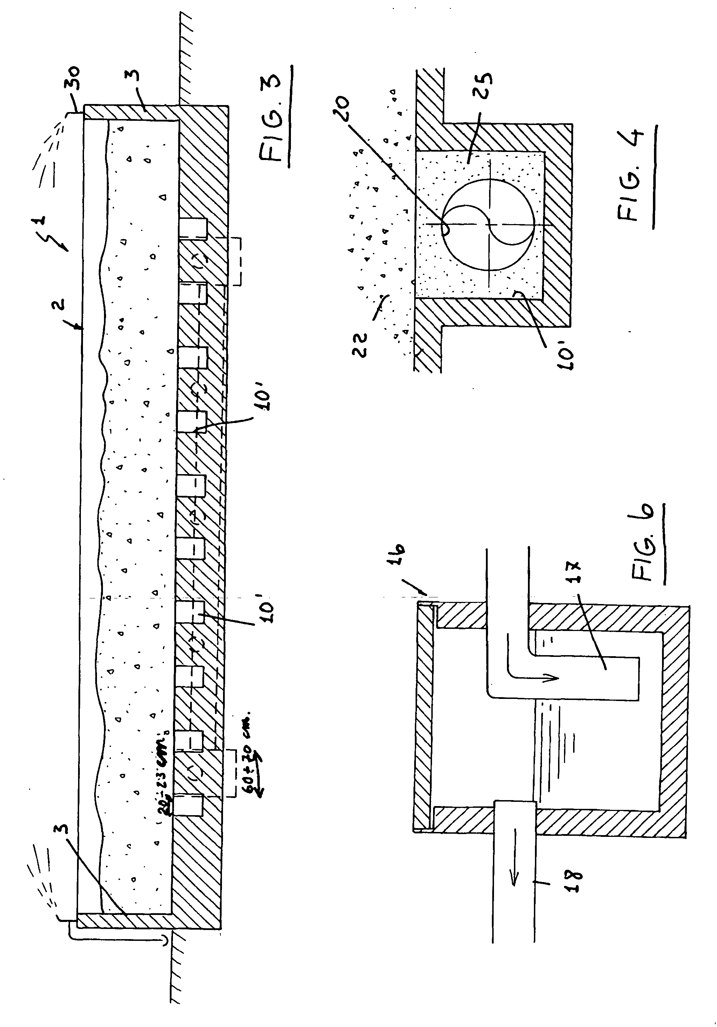

Figure 3 illustrates a further cross-sectional view of the apparatus substantially taken along the line III-III of figure 1;
Figure 4 illustrates a further cross-sectional view, on an enlarged scale, of the apparatus substantially taken along the line IV-IV of figure 1;
Figure 5 illustrates a detail of the exhausted air distributing or delivering pipes;
   and
Figure 6 illustrates a detail of the siphon element included in the apparatus according to the invention.

### DESCRIPTION OF THE PREFERRED EMBODIMENT

With reference to the number references of the above mentioned figures, the apparatus for biofiltering exhausted air from waste water processing systems, waste material storing, pre-processing and processing systems, which has been generally indicated by the reference number 1, comprises a concrete basin, generally indicated by the reference number 2, which comprises long and short sides, and which is provided, along the long sides thereof, with concrete toewalls 3 and being provided, at at least a short side thereof, or at both sides thereof, with removable benches 4, allowing the biofilter inside to be easily accessed.

The size of the basin will depend on the flow rate of the air to be processed, which is fed into said basin by a fan 5, upstream of which a scrubber or powder removal device 6 can be installed.

A main parameter for sizing the subject apparatus, is the contact time in which air remains in contact with the biofilter, which contact time must not be less than 30 seconds.

The volumetric load, on the other hand, must not exceed 120 Nm3 of air for a m³ of filtering mass.

In order to-meet the above mentioned values of the sizing parameters, and allow the exhausted air to be properly distributed through the filtering medium, it is necessary that the maximum length of the individual distributing pipes do not exceed 15 m. The inter-axis between two air distributing pipes must be of 60ö70 cm.

The above mentioned parametric values are necessary to provide a homogeneous flow through the filtering medium, affecting the overall filtering mass and allowing a proper driving of the mechanical means on the biofilter bottom.

A main feature of the invention is that on the bottom of the basin 2 are provided a first plurality 10' and a second plurality 10" of draining channels, in which are engaged corresponding exhausted air distributing tube 20, extending respectively from a first central manifold 11' and a second central manifold 11", said manifolds 11' and 11" being connected to the fan 5 through the interposition of shut-off air locks, generally indicated by the reference number 13.

Said manifold, as shown, extend substantially perpendicular to the mentioned channels 10'.

Said channels 10', at their opposite end portions, are connected with further draining channels 15, which, in turn, are coupled to the hydraulic discharging net, through hydraulic protective elements 16, like the hydraulic protective member 16 provided at the end portion of the channel housing said manifolds 11' and 11".

Said hydraulic protective elements 16, are practically constituted by siphon elements 17, therefrom extends the discharging or outlet duct 18, thereby providing a system allowing to collect condensate material, atmospheric water, as well as further water supplied, as it will become more apparent hereinafter, for moistening purposes, while preventing air from exiting the draining network or system.

The exhausted air distributing or delivering pipes, generally indicated by the reference number 20, which are connected to said manifolds 11' and 11", advantageously comprise a plurality of asymmetrical holes 21, aiding the ejecting of the exhausted air toward the filtering mass, generally indicated by the reference number 22.

As shown, the channels 10' and 10" extend in the feeding direction of operating means provided for performing servicing and replacing operations on the filtering medium.

The specifically designed width of the mentioned channels 10' and 10", which is of about 20-23 cm, prevent the wheels of the mechanical means from sinking thereby protecting the pipes from possible damages.

To the above it should be further added that the mentioned draining channels 10' and 10" do not require protective grids which could be clogged, thereby reducing to a minimum the servicing on maintenance operations.

The space between the pipes and channels can be filled by coarse material, generally indicated by 25, comprising, for example, gravel material, wood chips and the like, to allow water present in said channels to be easily drained.

The provision of valves 13 on the air inlet manifolds, allows to split into compartments the several filter sections, thereby it is possible to hold a portion of the filtrum operative, during servicing or replacing operations for servicing or replacing the remaining filter part.

If desired, it is also possible to directly moisten the filtering mass by using spray nozzles 30 arranged, for example, on the walls of the basin or by using specifically designed moistening devices 31 feeding directly moistening air into the air being processed.

The specifically designed arrangement of said draining channels and of the manifold channels 11' and 11", allows to provide an optimum water draining, and the drained water can be collected and reused for other applications or sent to the sewage system.

From the above disclosure it should be apparent that the apparatus according to the present invention allows to easily access inside the mechanical means, of comparatively great size, provided in the inventive apparatus.

Moreover, it allows to easily and quickly replace the filtering material, which replacement can be carried out by mechanical means directly arranged inside the biofilter, the floor of which can support the mentioned mechanical driving means.

A further important aspect of the invention is that the exhausted air distributing system allows to quickly and easily adjust the air flow rates for the individual biofilter sections.

Furthermore, the apparatus does not require any servicing or maintenance operation.

The draining system too does not require any servicing operations.

## Claims

1. An apparatus (1) for biofiltering exhausted air from waste water processing systems, waste material storing, pre-processing and processing systems, **characterized in that** said apparatus comprises a concrete basin (2) for holding filtering material therein, said basin having long sides and short sides, said basin being delimited, through the long sides thereof, by toewalls (3) and, through at least a short side thereof, by at least a removable bench (4), said basin having a basin bottom on which is provided at least a first plurality of draining channels (10') in which are engaged exhausted air distributing pipes (20), said pipes being connected to at least an exhausted air inlet manifold, said draining channels extending in the feeding direction of filtering material servicing and replacing means.

2. An apparatus, according to the preceding claim, **characterized in that** said apparatus comprises a first (10') and a second (10") plurality of draining channels in which are engaged corresponding air delivery pipes, said delivery pipes extending from a first (11') and a second (11") exhausted air inlet manifold.

3. An apparatus, according to the preceding claims, **characterized in that** said apparatus further comprises, at end portions of said draining channels and at the end portions of the central channel in which are engaged said manifolds, hydraulic protective elements (16) for conveying the drained water.

4. An apparatus, according to one or more of the preceding claims, **characterized in that** said apparatus further comprises, at an upstream portion thereof, an exhausted air inlet fan (5).

5. An apparatus, according to one or more of the preceding claims, **characterized in that** said apparatus further comprises, upstream of said fan (5), a scrubbing or powder removing device.

6. An apparatus, according to one or more of the preceding claims, **characterized in that** said apparatus further comprises, at an inlet region of said manifolds, valve elements (13) for controlling the air and water flows through the system.

7. An apparatus, according to one or more of the preceding claims, **characterized in that** said draining channels are parallel to one another and house said pipes therein through the interposition of a draining course material.

8. An apparatus, according to one or more of the preceding claims, **characterized in that** said apparatus further comprises spraying devices for spraying water on the filtering material.

9. An apparatus, according to one or more of the preceding claims, **characterized in that** said apparatus further comprises moistening devices arranged on the exhausted air inlet line.

## Patentansprüche

1. Vorrichtung (1) zur Biofilterung von Abluft aus Abwasserreinigungssystemen, Systemen zur Abfallaufbewahrung, -vorbehandlung und -behandlung, **dadurch gekennzeichnet, dass** die Vorrichtung ein Betonbecken (2) zum Halten von Filterungsmaterial darin umfasst, wobei das Becken lange Seiten und kurze Seiten aufweist und das Becken durch die langen Seiten davon von Spitzenwänden (3) und durch mindestens eine kurze Seite davon von mindestens einer entfernbaren Bank (4) begrenzt ist, wobei das Becken einen Beckenboden aufweist, auf dem mindestens mehrere erste Entwässerungskanäle (10') bereitgestellt sind, in denen Abluftverteilungsrohre (20) in Eingriff gebracht sind, wobei die Rohre mit mindestens einem Ablufteinlass-Sammelrohr verbunden sind, wobei der Antriebskanal in der Förderrichtung von Mitteln zur Wartung und zum Austausch des Filterungsmaterial verläuft.

2. Vorrichtung nach dem vorherigen Anspruch, **dadurch gekennzeichnet, dass** die Vorrichtung mehrere erste (10') und zweite (10") Entwässerungskanäle umfasst, in denen entsprechende Luftlieferungsrohre in Eingriff gebracht sind, wobei die Lieferungsrohre von einem ersten (11') und einem zweiten (11") Ablufteinlass-Sammelrohr verlaufen.

3. Vorrichtung nach den vorherigen Ansprüchen, **dadurch gekennzeichnet, dass** die Vorrichtung ferner an Endabschnitten der Entwässerungskanäle und an den Endabschnitten des Zentralkanals, in dem die Sammelrohre in Eingriff gebracht sind, hydraulische Schutzelemente (16) zum Befördern des Abflusswassers umfasst.

4. Vorrichtung nach einem oder mehreren der vorherigen Ansprüche, **dadurch gekennzeichnet, dass** die Vorrichtung an einem stromaufwärts liegenden Abschnitt davon ferner einen Ablufteinlassventilator (5) umfasst.

5. Vorrichtung nach einem oder mehreren der vorherigen Ansprüche, **dadurch gekennzeichnet, dass** die Vorrichtung stromaufwärts von dem Ventilator (5) ferner eine Auswasch- oder Pulverentfernungsvorrichtung umfasst.

6. Vorrichtung nach einem oder mehreren der vorherigen Ansprüche, **dadurch gekennzeichnet, dass** die Vorrichtung an einem Einlassbereich der Sammelrohre ferner Ventilelemente (13) zum Steuern der Luft- und Wasserströmungen durch das System umfasst.

7. Vorrichtung nach einem oder mehreren der vorherigen Ansprüche, **dadurch gekennzeichnet, dass** die Entwässerungskanäle parallel zueinander sind und durch die Einfügung eines Entwässerungsverlaufsmaterials darin die Rohre aufnehmen.

8. Vorrichtung nach einem oder mehreren der vorherigen Ansprüche, **dadurch gekennzeichnet, dass** die Vorrichtung ferner Zerstäubungsvorrichtungen zum Zerstäuben von Wasser auf das Filterungsmaterial umfasst.

9. Vorrichtung nach einem oder mehreren der vorherigen Ansprüche, **dadurch gekennzeichnet, dass** die Vorrichtung ferner Anfeuchtungsvorrichtungen umfasst, die auf der Ablufteinlassleitung angeordnet sind.

## Revendications

1. Dispositif (1) de biofiltrage d'air d'échappement issu de systèmes de traitement des eaux résiduaires, du stockage de déchets, de systèmes de pré-traitement et de traitement, **caractérisé en ce que** ledit dispositif comprend un bassin en béton (2) pour y maintenir le matériau de filtrage, ledit bassin présentant des côtés longs et des côtés courts, ledit bassin étant délimité, au travers des côtés longs de celui-ci, par des parafouilles (3) et, au travers d'au moins un petit côté de celui-ci, par au moins une tablette (« bench ») amovible (4), ledit bassin présentant une partie inférieure de bassin sur laquelle est prévue au moins une première pluralité de canaux de drainage (10') dans lesquels sont engagés les conduits (20) de distribution d'air d'échappement, lesdits conduits étant connectés à au moins un collecteur d'entrée d'air d'échappement, ledit canal d'entraînement s'étendant dans la direction d'alimentation des moyens de remplacement et d'entretien des matériaux de filtrage.

2. Dispositif, selon la revendication précédente, **caractérisé en ce que** ledit dispositif comprend une première (10') et un seconde (10") pluralité de canaux de drainage dans lesquels sont engagés les conduits correspondants d'apport en air, lesdits conduits d'apport s'étendant à partir d'un premier (11') et d'un second (11") collecteurs d'entrée d'air d'échappement.

3. Dispositif, selon les revendications précédentes, **caractérisé en ce que** ledit dispositif comprend en outre, au niveau des parties d'extrémité des canaux de drainage et au niveau des parties d'extrémité du canal central dans lesquels sont engagés lesdits collecteurs, des éléments de protection hydrauliques (16) pour transporter l'eau drainée.

4. Dispositif selon l'une quelconque des revendications précédentes, **caractérisé en ce que** ledit dispositif comprend en outre, au niveau d'une partie en amont de celui-ci, un ventilateur (5) d'entrée d'air d'échappement.

5. Dispositif selon l'une quelconque des revendications précédentes, **caractérisé en ce que** ledit dispositif comprend en outre, en amont dudit ventilateur (5), un dispositif de nettoyage ou d'élimination de poudres.

6. Dispositif selon l'une quelconque des revendications précédentes, **caractérisé en ce que** ledit dispositif comprend en outre, au niveau d'une partie d'entrée desdits collecteurs, des éléments à valve (13) pour contrôler les écoulements de l'air et de l'eau au travers du système.

7. Dispositif selon l'une quelconque des revendications précédentes, **caractérisé en ce que** lesdits canaux de drainage sont parallèles les uns aux autres et logent lesdits conduits par l'interposition d'un matériau de tracé de drainage.

8. Dispositif selon l'une quelconque des revendications précédentes, **caractérisé en ce que** ledit dispositif comprend en outre, des dispositifs de pulvérisation pour pulvériser de l'eau sur le matériau de filtrage.

9. Dispositif selon l'une quelconque des revendications précédentes, **caractérisé en ce que** ledit dispositif comprend en outre, des dispositifs d'humidification disposés sur la conduite d'entrée de l'air d'échappement.
